# EUROPÄISCHE PATENTSCHRIFT

(11) **EP 0 857 622 B1**
(45) Veröffentlichungstag und Bekanntmachung des Hinweises auf die Patenterteilung: **23.01.2002**
(21) Anmeldenummer: 97122220.3
(22) Anmeldetag: 17.12.1997
(51) Int. Cl.: B60R 21/20

(54) **Gehäuse für den Gassack in einem Kraftfahrzeug**
Housing for an air bag in a motor vehicle
Boîtier pour coussin gonflable dans un véhicule automobile

(30) Priorität: 01.02.1997 DE 19703787
(43) Veröffentlichungstag der Anmeldung: 12.08.1998
(73) Patentinhaber: ZF Lemförder Metallwaren AG, 49448 Lemförde (DE)
(72) Erfinder: Wagener, Keit, 49143 Bissendorf (DE); Stölting, Guido, 49439 Steinfeld (DE); Klenk, Jürgen, 65486 Ginsheim (DE); Rick, Ulrich, 55595 Roxheim (DE)

(56) Entgegenhaltungen:
- DE-A- 4 338 666
- DE-A- 4 340 999
- DE-A- 19 618 817
- US-A- 5 439 246
- KLENK J ET AL: "AIRBAG-HYBRIDTECHNIK IM NEUEN OPEL VECTRA" ATZ AUTOMOBILTECHNISCHE ZEITSCHRIFT, Bd. 98, Nr. 9, September 1996, Seiten 438-443, XP000627477

## Beschreibung

Die Erfindung betrifft ein Gehäuse für einen aufblasbaren Gassack in einem Kraftfahrzeug nach dem Oberbegriff des Patentanspruches 1.

Der Einsatz von aufblasbaren Gassäcken oder Airbags erfolgt im modernen Automobilbau in zunehmendem Maße. Der Gassack wird dabei zusammen mit einer Aufblasvorrichtung in einem Gehäuse untergebracht. Die Aufblasvorrichtung wird auch als Gasgenerator bezeichnet. Die Zündung des Systems erfolgt über Sensoren. Unmittelbar nach der Zündung des Gasgenerators treten am Gehäuse, im Bereich des Gassackaustrittes, durch den dort frei werdenden Druck partiell extrem große Kräfte auf, die das Gehäuse fischmaulartig nach außen aufweiten. Die größte Aufweitung erfolgt dabei etwa mittig im Bereich der freien Öffnung der Vorderkammer. Der austrittsseitige Bereich dieser Vorderkammer wird auch als Schußkanal bezeichnet. Durch die fischmaulartige Erweiterung des Schußkanals können Beschädigungen der umliegenden Bauteile entstehen, die beispielsweise bei auf der Beifahrerseite eingebautem Gassack dazu führen können, daß das gesamte Armaturenbrett deformiert wird und ausgewechselt werden muß. Dadurch entstehen Kosten, die vermeidbar sind.

Bekannt sind Gehäuseausführungen für aufblasbare Gassäcke, die den Fischmauleffekt vermeiden sollen, in unterschiedlichsten Varianten.

So geht beispielsweise aus DE 41 41 617 A1 ein Fahrzeuggassackmodul hervor, bei der ein gefalteter Gassack und eine Aufblasvorrichtung gemeinsam in einem Gehäuse untergebracht sind und als komplette Baueinheit in das Fahrzeug eingesetzt werden. Das Gehäuse weist bei der in dieser Schrift dargestellten Lösung zwei Abteile auf, ein vorderes und ein hinteres Abteil. In das hintere Abteil wird eine Aufblasvorrichtung eingesetzt. Diese besteht aus einem zylindrischen, äußeren Gehäuse, in dem eine Vielzahl von Düsen ausgebildet sind. Das zylindrische äußere Gehäuse wird als Diffusor bezeichnet. Der Diffusor dient zur Aufnahme des Gasgenerators. Die Bohrungen des Diffusors sind so im Gehäuse der Gassackeinheit angeordnet, daß ein gerichtetes Ausströmen des Gases in den Gassack erfolgen kann. Ohne einen Diffusor käme es zu einer ungleichmäßigen Ausbreitung des Gases, nachdem der Gasgenerator gezündet hat. Dies wäre nicht wünschenswert, da der Gassack in Bruchteilen von Sekunden sicher, zuverlässig und gleichmäßig aufgeblasen werden muß, um seiner Bestimmung gemäß zu funktionieren.
Der Diffusor mit dem darin eingesetzten Gasgenerator wird in ein Loch in der einen Seitenwand des Gehäuses eingeführt und über einen Gewindeschaft mit der gegenüberliegenden Gehäusewand verschraubt.
Der Gassack selbst ist in einen verstärkten Rahmen eingesetzt, der in das Gehäuse eingefügt wird.
Die gesamte Gehäusekonstruktion ist bei der gezeigten Ausführung aus mehreren Einzelteilen zusammengesetzt. Das Gehäuse ist als Blechteil hergestellt. Neben der fertigungstechnisch aufwendigen Herstellung hat ein derartiges Gehäuse den Nachteil eines hohen Eigengewichtes.

Um diese Nachteile auszugleichen wird in der DE 43 38 666 A1 vorgeschlagen, ein Gehäuse für einen Airbag aus Kunststoff herzustellen. Kunststoff bringt eine erhebliche Gewichtsersparnis im Vergleich zu metallischen Materialien mit sich. Bei der in dieser Schrift vorgestellten Lösung werden zudem die Halterungen zur Befestigung des Gehäuses im Kraftfahrzeug einstückig mit dem Kunststoffgehäuse ausgeführt.

**Das aus der DE 43 38 666 A1 bekannte Airbaggehäuse wird darüber hinaus in der Automobiltechnischen Zeitschrift (ATZ) 98 (1996) 9, S. 438 ff beschrieben. Im Unterschied zu der in DE 43 38 666 A1 offenbarten Ausführung ist hier jedoch ein Gehäuse entnehmbar, das im vorderen Bereich des Schußkanals zweiwandig mit vertikal angeordneten Stegen ausgeführt ist. Dieses Gehäuse weist die Merkmale des Oberbegriffs des Anspruchs 1 auf.**

Der vorliegenden Erfindung liegt das technische Problem zugrunde, ein Gehäuse für den aufblasbaren Gassack in einem Kraftfahrzeug zu entwickeln, das einfacher und kostengünstiger herstellbar ist, als bekannte Ausführungen und das das Aufweiten des Schußkanals während des Aufblasvorganges des Gassackes weiter reduziert.

Gelöst wird diese Problemstellung mit den kennzeichnenden Merkmalen des Patentanspruches 1. Ausgestaltungen der Erfindung sind Gegenstand der Unteransprüche.

Ein erfindungsgemäßes Gehäuse kann aus einer oder auch aus mehreren Kammern bestehen, wobei vorteilhafter Weise eine Vorderkammer zur Aufnahme des gefalteten Gassacks oder Gasackmoduls und eine hintere Kammer zum Einbau des erwähnten Gasgenerators dient. Der Gasgenerator wird dabei in einen Dffusor eingesetzt. Die hintere Kammer kann als Diffusorkammer ausgeführt sein oder den Diffusor als separates Bauteil aufnehmen.
Zwischen der Diffusorkammer und der Vorderkammer können zudem Versteifungsrippen zur Anlage des gefalteten Gassackes vorgesehen werden. Die Versteifungsrippen verbinden Ober- und Unterseite der vorderen Kammer, stabilisieren einerseits das Gehäuse zusätzlich von innen und gewährleisten andererseits einen Abstand zwischen dem Gassackmodul und der hinteren Kammer des Gehäuses. Zwischen den Versteifungsrippen befinden sich die Gasdurchlassöffnungen.

Ein erfindungsgemäßes Gehäuse für einen aufblasbaren Gassack in einem Kraftfahrzeug ist multifunktional, weil es mehrere Funktionen gleichzeitig erfüllt. So sind an dem einstückigen Gehäuse in an sich bekannter Weise
Befestigungshalterungen unmittelbar angeformt, die zum Einbau des Gehäuses in das Kraftfahrzeug erforderlich sind. Zudem ist es vorteilhaft, Steckerbefestigungen, Kabelhalterungen oder weitere Bauteile einteilig mit dem Gehäuse auszuführen, wenn dieses beispielsweise als Kunststoff-Formteil im Spritzgußverfahren in einem Arbeitsgang hergestellt wird. Die aufwendige Fertigung und Montage zahlloser Einzelbauteile wird somit auf ein Minimum reduziert. Das Spritzgußverfahren gestattet eine relativ einfache und vorallem kostengünstige Fertigung eines erfindungsgemäßen Gehäuses auch als Massenartikel. Kunststoffbietet sich zudem als Werkstoff an, da er leicht verarbeitbar ist und eine hohe Gewichtsreduzierung gegenüber metallischen Ausführungen ermöglicht.
Sofern Kunststoff zur Anwendung kommt, ist es darüber hinaus in einfacher Weise möglich, diesen durch Beigabe von Zusatzstoffen, wie beispielsweise Glasfasermaterialien, zu verstärken. Selbstverständlich können dem Kunststoff auch andere Werkstoffe beigemengt werden. Denkbar ist beispielsweise auch eine Armierung aus Metallen oder eine Kombination unterschiedlicher Kunststoffe. Die Wahl des Kunststoffes spielt ebenfalls eine entscheidende Rolle. Als vorteilhaft haben sich modifizierte Polyamide erwiesen.

Selbstverständlich kann das Gehäuse aber auch aus einer im Aluminiumdruckgußverfahren hergestellten Aluminiumausführung bestehen.

Um den hohen Festigkeitsanforderungen eines erfindungsgemäßen Gehäuses zur Aufnahme eines Gassackes in einem Kraftfahrzeug gerecht zu werden, ist es vorteilhaft, die Vorderkammer zur Aufnahme des Gassackmoduls mehrwandig auszuführen.
Als Verbindungen der einzelnen Wandungen dienen vorzugsweise Stege, die ähnlich einer Brückenkonstruktion Tragwerke in Parallelanordnung, in Dreiecksausführung oder in anderer Weise bilden. Somit kann gegenüber bekannten Gehäuseausführungen eine erheblich größere Stabilität erreicht werden.
Eine mehrwandige Ausführung ist insbesondere dann effizient, wenn jeweils zwei oder mehr voneinander getrennte, parallele Kammerhohlräume die Außenwandung der Vorderkammer zur Aufnahme des Gassackmoduls bilden. Es entsteht somit eine Art Sandwichbauweise. Zumindest der Schußkanal der Vorderkammer sollte erfindungsgemäß mehrwandig ausgeführt sein, da er beim Aufblasen des Gassackes den größten Belastungen ausgesetzt ist.

Darüber hinaus ergibt sich ein erheblicher Stabilitätsvorteil eines erfindungsgemäßen Gehäuses, wenn sich die das Gassackmodul aufnehmende Vorderkammer, wenigstens jedoch der Schußkanal, zur Gassack-Austrittsseite hin gleichmäßig erweitert, also im Querschnitt gesehen V-förmig ausgebildet ist. Eine derartige Gestaltung ermöglicht eine verbesserte Ausbreitung des Gassackes während des Aufblasvorganges.

Die erfindungsgemäße Verbesserung der Gehäusesteifigkeit wird erreicht, indem die den Gassack aufnehmende Kammerwand an ihrer äußeren, freien Oberfläche zusätzlich mit Versteifungsrippen versehen wird. Diese Versteifungsrippen sind effektiv wirksam und erweitern sich von dem schwächsten Punkt der Kammerwandung ausgehend, sternförmig, V-förmig, radialsegmentartig oder kreisbogenförmig.

Der schwächste Punkt der Kammerwandung befindet sich an der Frontseite des Schußkanals genau mittig, da die Kammerwand an dieser Stelle die größten freien Wege zurücklegen kann. Bei einer Strukturierung und gleichzeitig mehrwandiger Ausführung der Kammerwand kann gegenüber bekannten Ausführungen die Wandstärke bei verbesserter Festigkeit sogar noch reduziert werden, sodaß ein erfindungsgemäßes Gehäuse eines aufblasbaren Gassackes mit weniger Material hergestellt werden kann und somit ein geringeres Gewicht aufweist.

Vorteilhaft sind bei einem erfindungsgemäßen Gehäuse für einen aufblasbaren Gassack in einem Kraftfahrzeug die bessere Anpassungsmöglichkeiten an das Einbau-Umfeld und eine sich daraus ergebende vereinfachte Montage. Die Gewichtsminimierung ermöglicht bei gleichzeitig verbesserter Festigkeit infolge der möglichen Materialeinsparungen somit auch eine kostengünstigere Herstellbarkeit ohne Sicherheitseinschränkungen hinnehmen zu müssen.

Ein Ausführungsbeispiel der Erfindung wird nachstehend unter Bezugnahme auf die Zeichnung näher erläutert. Es zeigen:
**Figur 1:** eine dreidimensionale Darstellung eines erfindungsgemäßen Gehäuses für einen aufblasbaren Gassack in einem Kraftfahrzeug,
**Figur 2:** eine dreidimensionale Darstellung eines weiteren erfindungsgemäßen Gehäuses für einen aufblasbaren Gassack in einem Kraftfahrzeug,
**Figur 3:** eine mögliche Verrippung eines erfindungsgemäßen Gehäuses und
**Figur 4:** eine weitere Verrippung eines erfindungsgemäßen Gehäuses.

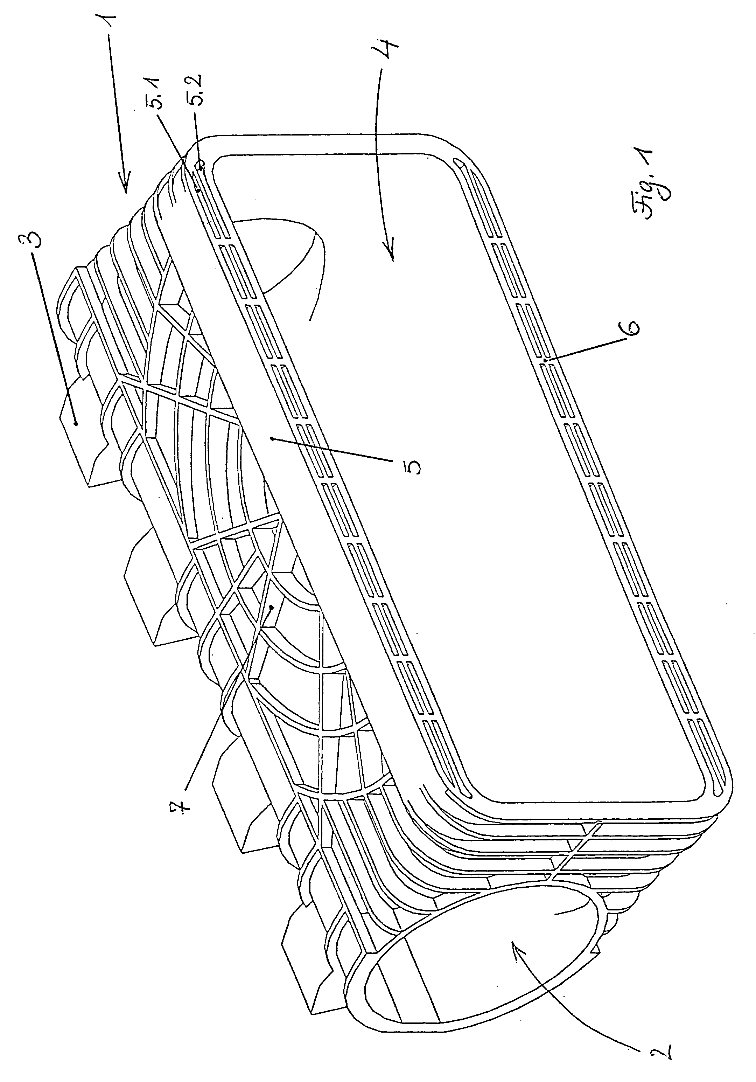

In der **Figur 1** ist eine dreidimensionale Darstellung eines erfindungsgemäßen Gehäuses (1) für einen aufblasbaren Gassack in einem Kraftfahrzeug dargestellt.
Ein derartiges Gehäuse (1) ist zusammen mit den daran angeformten Halterungen (3) einteilig ausgeführt. Es besteht aus Kunststoff und wird im Spritzgußverfahren hergestellt.
Das aus zwei Kammerbereichen bestehende Gehäuse weist eine Vorderkammer (4) zur Aufnahme des gefalteten Gassacks oder Gasackmoduls und eine Diffusorkammer (2) zum Einbau des Diffusors und des Gasgenerators auf Beide Kammerbereiche bilden gemeinsam den Innenraum des Gehäuses (1). Der Austrittsbereich der Vorderkammer (4) wird auch als Schußkanal bezeichnet.
Um den hohen Festigkeitsanforderungen eines erfindungsgemäßen Gehäuses (1) zur Aufnahme eines Gassackes in einem Kraftfahrzeug gerecht zu werden, ist der Schußkanal mehrwandig ausgeführt.
Eine mehrwandige Ausführung ist insbesondere dann effizient, wenn, wie hier dargestellt, mehr als zwei voneinander getrennte, parallele Kammerhohlräume (5.1 und 5.2) die Außenwandung (5) der Vorderkammer (4) in Sandwichbauweise bilden. Die mehrwandige Außenwandung weist ähnlich einer Brückenkonstruktion Querversteifungsrippen (6) auf, die somit Tragwerke in Parallelanordnung bilden.
Das vorliegende Gehäuse besteht aus modifiziertem Polyamid und ist zur Erhöhung der Festigkeit zusätzlich mit Glasfasern verstärkt.

Eine Verbesserung der Gehäusesteifigkeit läßt sich neben der mehrwandigen Ausführung der Kammerwand insbesondere auch erreichen, indem die den Gassack aufnehmende Außenwandung an ihrer äußeren freien Oberfläche zusätzlich mit Versteifungsrippen (7) versehen wird. Diese Versteifungsrippen (7) sind nur effektiv wirksam, wenn sie sich von dem schwächsten Punkt der Kammerwand (5) ausgehend, erweitern. Der schwächste Punkt der Kammerwand (5) befindet sich an der Frontseite des Schußkanals (4) genau mittig, da die Kammerwand (5) an dieser Stelle die größten freien Wege zurücklegen kann.
Bei der in der Figur 1 gezeigten Ausführungsform erweitern sich die Versteifungsrippen (7) V- förmig und sind mit kreisbogenförmigen Versteifungsrippen kombiniert.
Bei einer Strukturierung und gleichzeitig mehrwandiger Ausführung der Kammerwand (5) kann gegenüber bekannten Ausführungen die Wandstärke bei verbesserter Festigkeit sogar noch reduziert werden, sodaß ein erfindungsgemäßes Gehäuse eines aufblasbaren Gassackes mit weniger Material hergestellt werden kann, als bisher bekannte Ausführungen und somit ein geringes Gewicht aufweist.

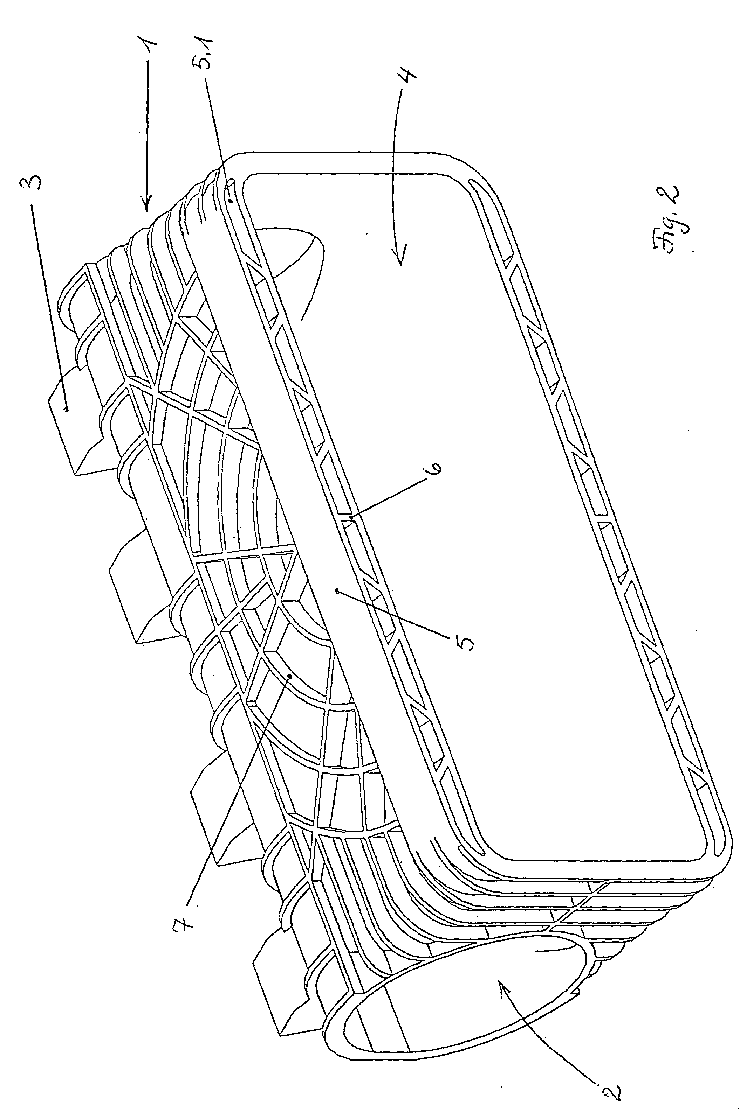

In der Figur 2 ist ebenfalls eine dreidimensionale Darstellung eines weiteren erfindungsgemäßen Gehäuses für einen aufblasbaren Gassack in einem Kraftfahrzeug dargestellt. Bei dieser Variante eines Gehäuses ist verglichen mit der in Figur 1 gezeigten, der Schußkanal der Vorderkammer (4) zur Aufnahme des Gassackmoduls ebenfalls mehrwandig ausgeführt. Die Kammerhohlräume (5.1) bestehen hierbei allerdings aus, in der Ansicht von vorne gesehen, trapezförmigen Ausnehmungen, sodaß insgesamt ein stabiles Tragwerk mit Querversteifungsrippen (6) entsteht.

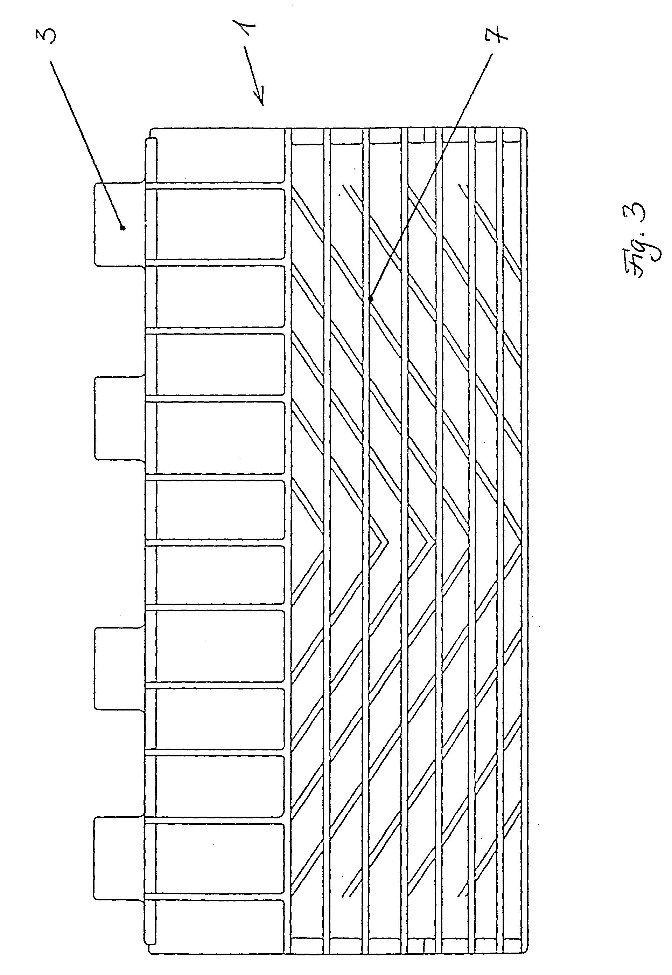

Aus Figur 3 ist darüber hinaus noch eine zusätzliche Variante einer Verrippung der freien äußeren Oberfläche der Kammerwand (5) entnehmbar. Die Versteifungsrippen (7) sind dabei als Kombinationen von V-förmigen mit zwischen den Wandungen vertikal verlaufenden Rippen ausgeführt.

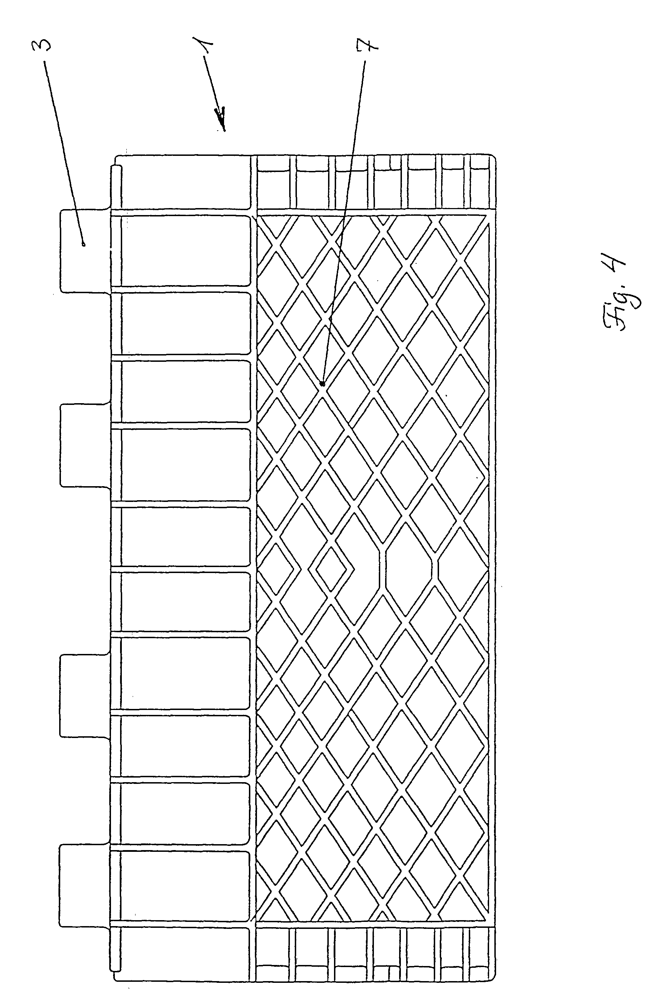

In der Figur 4 ist zudem eine Variante der Verrippung der freien äußeren Oberfläche der Kammerwand (5) dargestellt, die eine Wabenstruktur der Versteifungsrippen (7) aufweist.

## Patentansprüche

1. Gehäuse (1) für einen aufblasbaren Gassack in einem Kraftfahrzeug in einteiliger Ausführung, mit daran angeformten Befestigungshalterungen (3), einer Diffusorkammer (2) sowie einer Kammer zur Aufnahme des gefalteten Gassackes und mit an der Gehäuseaußenseite angeformten Versteifungsrippen (7), wobei das Gehäuse (1) zumindest im Bereich des Schußkanals (4) mehrwandig ausgeführt ist, **dadurch gekennzeichnet, daß** sich die Versteifungsrippen (7) von der Mitte des vorderen Randes (5) aus sternförmig, V-förmig, radialsegmentartig oder kreisbogenförmig erweitern.

2. Gehäuse für einen aufblasbaren Gassack in einem Kraftfahrzeug nach Anspruch 1,
**dadurch gekennzeichnet, daß**
das Gehäuse (1) ein Kunststoffspritzgußteil ist.

3. Gehäuse für einen aufblasbaren Gassack in einem Kraftfahrzeug nach Anspruch 1,
**dadurch gekennzeichnet, daß**
das Gehäuse (1) ein Aluminiumdruckgußteil ist.

4. Gehäuse für einen aufblasbaren Gassack in einem Kraftfahrzeug nach einem der Ansprüche 1 bis 3,
**dadurch gekennzeichnet, daß**
Steckerbefestigungen und / oder Kabelhalterungen an dem Gehäuse (1) angeformt sind.

5. Gehäuse für einen aufblasbaren Gassack in einem Kraftfahrzeug nach einem der Ansprüche 1 bis 4,
**dadurch gekennzeichnet, daß**
das Gehäuse (1) durch Beigabe von Zusatzstoffen, wie beispielsweise Glasfasermaterialien oder einer Armierung aus Metallen verstärkt ist.

6. Gehäuse für einen aufblasbaren Gassack in einem Kraftfahrzeug nach einem der Ansprüche 1 bis 5,
**dadurch gekennzeichnet, daß**
sich wenigstens der Schußkanal (4) des Gehäuses (1) zur Gassack-Austrittsseite hin gleichmäßig erweitert, also im Querschnitt gesehen annähernd V-förmig ausgebildet ist.

## Claims

1. Housing (1) for an inflatable airbag in a motor vehicle, the said housing being of one-piece design and having fastening mountings (3) for a diffuser chamber (2) formed onto it and also having a chamber for receiving the folded airbag and having stiffening ribs (7) formed onto the outside of the housing, wherein the said housing is of multi-wall design, at least in the region of the firing duct (4), **characterised in that** the stiffening ribs (7) widen from the centre of the front edge (5) in the form of a star or a V, after the fashion of a radial segment or in the form of the arc of a circle.

2. Housing for an inflatable airbag in a motor vehicle, according to claim 1,
**characterised in that**
the housing (1) is a plastic injection-moulded part.

3. Housing for an inflatable airbag in a motor vehicle, according to claim 1,
**characterised in that**
the housing (1) is an aluminium diecast part.

4. Housing for an inflatable airbag in a motor vehicle, according to one of claims 1 to 3,
**characterised in that**
plug fastenings and/or cable mountings are formed onto the housing (1).

5. Housing for an inflatable airbag in a motor vehicle, according to one of claims 1 to 4,
**characterised in that**
the housing (1) is reinforced by the addition of additives such as, for example, glass fibre materials or armouring made of metals.

6. Housing for an inflatable airbag in a motor vehicle, according to one of claims 1 to 5,
**characterised in that**
at least the firing duct (4) of the housing (1) widens uniformly towards the airbag outlet side, that is to say, is of approximately V-shaped construction, viewed in cross-section.

## Revendications

1. Boîtier (1) pour coussin gonflable dans un véhicule automobile, réalisé d'un seul tenant et comportant des éléments de fixation (3) formés sur ledit boîtier, un compartiment pour le diffuseur (2), un compartiment pour loger le coussin gonflable plié et des nervures de renfort (7) formées sur le côté extérieur du boîtier, le boîtier (1) disposant de plusieurs parois au moins dans la partie du canal de projection (4), **caractérisé en ce que** les nervures de renfort (7) s'élargissent à partir du milieu du bord (5) avant, en forme d'étoile, de V, de segments radiaux ou d'arc de cercle.

2. Boîtier pour coussin gonflable dans un véhicule automobile selon la revendication 1, **caractérisé en ce que** le boîtier (1) est un élément en plastique réalisé selon un procédé de moulage par injection.

3. Boîtier pour coussin gonflable dans un véhicule automobile selon la revendication 1, **caractérisé en ce que** le boîtier (1) est un élément en aluminium réalisé selon un procédé de coulage sous pression.

4. Boîtier pour coussin gonflable dans un véhicule automobile selon l'une quelconque des revendications 1 à 3, **caractérisé en ce que** les éléments de fixation de connecteur et/ou les attaches de câbles sont formées sur le boîtier (1).

5. Boîtier pour coussin gonflable dans un véhicule automobile selon l'une quelconque des revendications 1 à 4, **caractérisé en ce que** le boîtier (1) est renforcé par l'addition de matières supplémentaires telles que par exemple, des matières en fibres de verre ou une armature en métaux.

6. Boîtier pour coussin gonflable dans un véhicule automobile selon l'une quelconque des revendications 1 5, **caractérisé en ce que**, au moins le canal de projection (4) du boîtier (1) s'élargit uniformément vers le côté de sortie du coussin gonflable, ainsi est réalisé approximativement en V vu dans la section transversale.
